# FASCICULE DE BREVET EUROPEEN

(11) **EP 3 343 714 B1**
(45) Date de publication et mention de la délivrance du brevet: **21.04.2021**
(21) Numéro de dépôt: 17204180.8
(22) Date de dépôt: 28.11.2017
(51) Int. Cl.: H02G 3/14

(54) **SYSTEME DE FIXATION D'UNE FACADE SUR UN COFFRET ENCASTRE**
SYSTEM ZUM ANBRINGEN EINER FASSADE AN EINER EINBAUDOSE
SYSTEM FOR ATTACHING A FACEPLATE TO A BUILT-IN BOX

(30) Priorité: 27.12.2016 FR 1663423
(43) Date de publication de la demande: 04.07.2018
(73) Titulaire: Legrand France, 87000 Limoges (FR); Legrand SNC, 87000 Limoges (FR)
(72) Inventeur: LAMBERT, Clément, 87400 La Geneytouse (FR)
(74) Mandataire: Novagraaf Technologies

(56) Documents cités:
- EP-A1- 0 961 374
- DE-A1- 2 658 452
- GB-A- 837 234
- GB-A- 190 910 860
- GB-A- 191 012 903

## Description

### DOMAINE TECHNIQUE DE L'INVENTION

La présente invention concerne de manière générale le domaine des installations électriques et plus précisément celui des coffrets électriques résidentiels encastrés. Elle vise en particulier un système de fixation d'une façade sur un coffret. Elle vise encore une entretoise particulièrement adaptée.

### ETAT DE LA TECHNIQUE ANTERIEURE

Les documents GB 837 234 A et GB 12903 A A.D. 1910 décrivent des systèmes de fixation d'une façade.

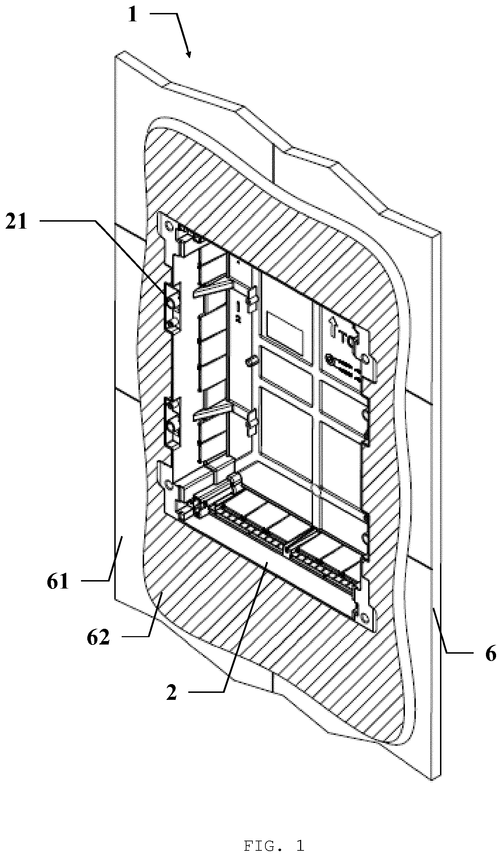

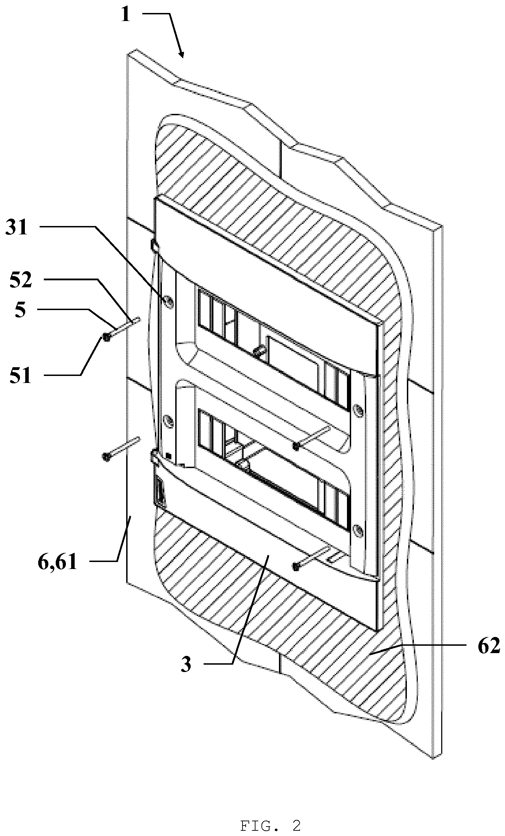

Il est connu de ranger des équipements électriques, tels des disjoncteurs, porte fusibles, temporisateurs, etc., dans un coffret. Tel qu'illustré aux figures 1,2, un tel coffret 2 est de manière classique disposé dans un mur 6, au droit de la sortie de câbles électriques destinés à être connectés auxdits équipements électriques. Le coffret 2 a pour fonction de protéger les équipements électriques et les câbles électriques, et leurs connexions, pouvant présenter des potentiels électriques potentiellement vulnérants pour un opérateur. Le coffret 2 est encastré dans le mur 6 de telle manière à sensiblement affleurer à une face brute 61 du mur 6.

Un coffret 2 est, de manière classique, refermé en fixant, au droit du coffret 2, une façade 3. Selon un mode de réalisation possible la façade 3 est fixée directement sur le coffret 2 par vissage. Pour cela, le coffret 2 comprend une pluralité de logements 21. La façade 3 comprend une même pluralité de trous 31 en regard des logements 21. La fixation est réalisée au moyen d'une même pluralité de vis 5. Le cardinal de la pluralité est typiquement égal à 2, ou comme illustré à 4.

Chaque vis 5 comprend une tête 51 et une tige filetée 52. Chaque trou 31 de la façade 3 est traversant et conformé de manière à permettre le passage d'une tige filetée 52 et à arrêter une tête 51,
présentant un diamètre plus important. Un logement 21 est apte à accueillir une tige filetée 52. Lors du vissage, la tige filetée 52 d'une vis 5 vient se visser dans le logement 21 et, la tête 51 de la vis 5 appuyant sur la façade 3, la vis 5 tire la façade 3 en direction du coffret 2.

Alors même que la tête 51 d'une vis 5 est apparente à l'extérieur de la façade 3, la tige filetée 52 de la même vis 5, traverse le volume du coffret 2 pour atteindre le logement 21, dont le fond est typiquement disposé en fond de coffret 2. Lorsqu'une vis 5 est métallique, elle constitue un conducteur électrique, désavantageusement présent depuis le fond du coffret 2, où sont généralement fixés les équipements électriques, jusqu'à la façade 3. En cas de contact C accidentel d'une vis 5 avec un potentiel électrique, par exemple du fait d'une extrémité d'un câble électrique malencontreusement débranchée, ce potentiel électrique se trouve communiqué par la vis 5, et est présent via sa tête 51, y compris sur la face externe de la façade 3.

Tant la façade 3 que le coffret 2 sont typiquement réalisés en matériau isolant. Aussi une partie substantielle de la longueur d'une vis 5, entourée par la façade 3, au niveau d'un trou 31, ou entourée par le coffret 2, au niveau d'un logement 21, est protégée d'un tel contact accidentel avec un potentiel électrique.

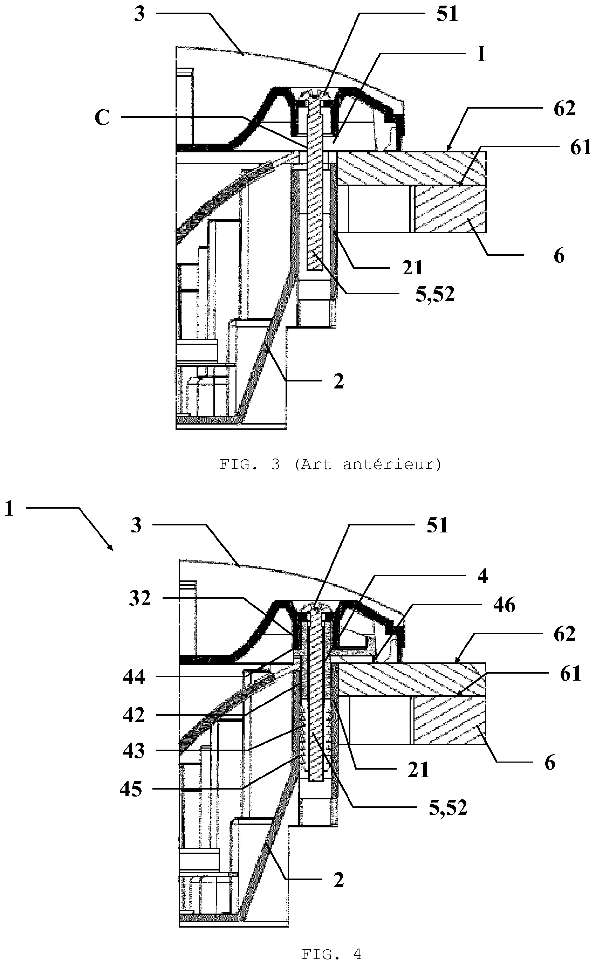

Tel qu'illustré à la figure 3, le coffret 2 est encastré dans le mur 6 et scellé. Le coffret comporte des pattes latérales assurant son positionnement en profondeur relativement à une face brute 61 du mur 6, parfaitement affleurant.

Suite à la mise en place du coffret 2 dans le mur 6, un revetement est déposé sur la face brute 61 du mur. Il peut s'agir d'un enduit, par exemple en platre, ou d'un carrelage. La surface externe de ce revetement forme une face finie 62 du mur, sensiblement parallèle à la face 61, mais cependant distante en profondeur d'un écart égal à l'épaisseur du revêtement, pouvant varier entre 2 et 10 mm.

La façade 3 est quant à elle conformée pour venir en appui contre la face finie 62 du mur 6. Il apparaît ici une différence de référence en profondeur entre d'une part la façade 3 en appui contre la face finie 62 et d'autre part le coffret 2 en appui contre la face brute 61. Aussi un intervalle I entre la façade 3 et le coffret 2 peut apparaître. Cet intervalle I laisse une tige filetée 52 d'une vis 5 à nu et sujette à un contact C accidentel avec un potentiel électrique. La hauteur de l'intervalle I est égale à l'épaisseur du revêtement.

### OBJECTIF DE L'INVENTION

L'objectif principal de l'invention est de proposer un moyen de protéger une vis contre tout risque de contact avec un potentiel électrique et ce malgré une possible variation de l'épaisseur de revêtement.

### RESUME DE L'INVENTION

L'apport principal de l'invention est une entretoise apte à être disposée entre la façade et le coffret, autour d'une vis de manière à protéger la vis de tout contact, et apte à s'adapter à une variation de l'épaisseur de revêtement.

L'invention concerne un système de fixation d'une façade définie par la revendication 1 annexée.

Ainsi, cette solution permet d'atteindre l'objectif précité. En particulier, grâce à la première butée axiale qui vient en appui sur la face finie du mur, l'entretoise trouve une référence constante, identique à celle de la façade, et se positionne correctement en profondeur, automatiquement, quelle que soit l'épaisseur de revêtement, assurant à la vis qu'elle entoure une protection totale contre tout risque de contact.

Selon une autre caractéristique technique, une entretoise est réalisée en un matériau électriquement isolant, préférentiellement en matière plastique, encore préférentiellement en polypropylène.

Une telle matière permet d'assurer l'isolement électrique de la vis entourée par l'entretoise.

Selon une autre caractéristique technique, un manchon est fermé sur toute sa périphérie, afin d'empêcher tout contact entre l'extérieur et l'alésage.

Selon une autre caractéristique technique, une entretoise comprend encore un embout façade disposé à une extrémité du manchon en regard de la façade et conformé de manière complémentaire avec une face interne de la façade au droit d'un trou, de manière à empêcher tout contact entre l'extérieur et l'alésage.

Cette caractéristique assure l'étanchéité entre façade et entretoise.

Selon une autre caractéristique technique, un embout façade présente une dimension, selon l'axe, relativement à la première butée axiale, telle que l'embout façade forme une butée à l'enfoncement de la façade.

Cette caractéristique évite l'application d'une contrainte sur la façade en cas de vissage trop énergique.

Selon une autre caractéristique technique, une entretoise comprend encore un embout coffret disposé à une autre extrémité du manchon en regard du coffret et conformé comme une cheville, apte à être introduit dans un logement, de telle manière à être apte à s'expanser dans le logement lors du vissage d'une tige filetée dans l'embout coffret.

Cette caractéristique assure l'étanchéité entre coffret et entretoise et permet de plus une fixation de la vis dans le logement et donc de la façade relativement au coffret.

Selon une autre caractéristique technique, la première butée axiale comprend une face d'appui sensiblement plane, sensiblement perpendiculaire à l'axe et regardant vers l'embout coffret.

Selon une autre caractéristique technique, la première butée axiale présente une extension, mesurée radialement relativement à l'axe, au moins égale à 10 mm, préférentiellement au moins égale à 15 mm.

Selon une autre caractéristique technique, une entretoise comprend encore un moyen d'indexage en rotation, complémentaire d'un moyen d'indexage en rotation disposé sur un logement, aptes à coopérer pour orienter l'entretoise autour de son axe de telle manière à diriger la première butée axiale vers le mur.

Selon une autre caractéristique technique, un manchon comprend une longueur insérable dans un logement, déterminée telle qu'une valeur minimale soit déterminée telle que l'embout coffret soit entièrement inséré dans le logement en l'absence de revêtement et en ajoutant à cette valeur minimale une épaisseur de revêtement maximale acceptable égale à 2mm, préférentiellement égale à 4 mm, et encore préférentiellement égale à 10 mm.

Selon une autre caractéristique technique, une entretoise comprend encore une deuxième butée axiale apte à venir en appui sur une ouverture d'un logement.

Selon une autre caractéristique technique, un logement présente une forme sensiblement cylindrique creuse

Selon une autre caractéristique technique, un logement comprend une section de forme conique, selon un cône pointant vers l'extérieur du logement, préférentiellement de conicité sensiblement égale à 5,5° de demi-angle au sommet.

### BREVE DESCRIPTION DES FIGURES

D'autres caractéristiques et avantages innovants de l'invention ressortiront à la lecture de la description ci-après, en référence aux dessins annexés, dans lesquels :
- la figure 1, déjà décrite, illustre en perspective un coffret selon l'art antérieur ou selon l'invention,
- la figure 2, déjà décrite, illustre en perspective une façade fermant un tel coffret selon l'art antérieur ou selon l'invention,
- la figure 3, déjà décrite, est une vue en coupe, d'un système selon l'art antérieur montrant le problème,
- la figure 4 est une vue en coupe, d'un système selon l'invention remédiant au problème,
- la figure 5 est une vue de face d'une entretoise selon un mode de réalisation de l'invention,
- la figure 6 est une vue latérale de l'entretoise de la figure 5,
- la figure 7 est une vue en perspective de l'entretoise de la figure 5,
- la figure 8 est une vue en perspective de l'entretoise de la figure 5, en configuration expansée par une vis,
- les figures 9-11 illustrent trois étapes successives de l'assemblage d'une façade sur un coffret au moyen d'une entretoise selon l'invention,
- la figure 12 illustre en perspective une façade assemblée sur un coffret au moyen d'une vis et d'une entretoise selon l'invention,
- la figure 13 illustre une autre caractéristique d'un logement selon l'invention.

Pour plus de clarté, les éléments identiques ou similaires sont repérés par des signes de référence identiques sur l'ensemble des figures.

### DESCRIPTION DETAILLEE D'UN MODE DE REALISATION

Si la figure 3 montre le problème, lié à la présence d'un intervalle I d'autant plus grand que l'épaisseur de revêtement est importante, la figure 4 montre comparativement la solution selon l'invention.

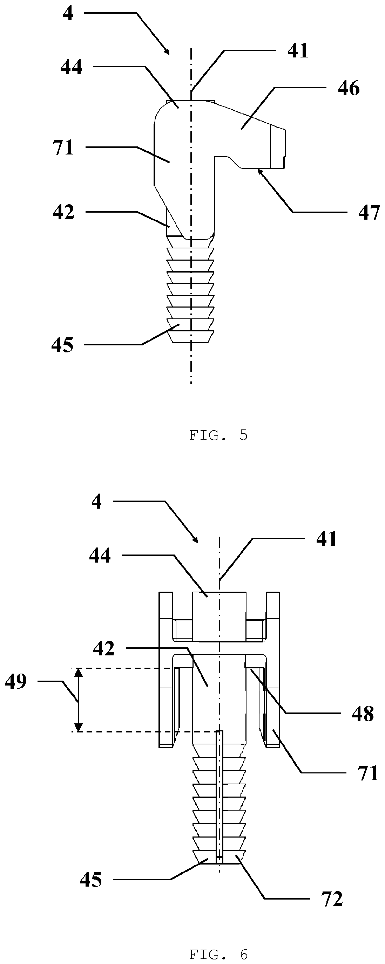

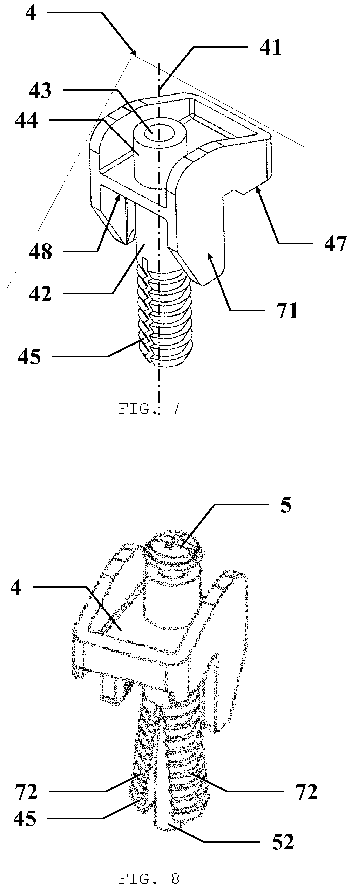

Il est inséré, entre coffret 2 et façade 3, au droit et autour de chaque vis 5 une entretoise 4. Telle qu'illustrée, selon un mode de réalisation détaillé aux figures 5-8, une entretoise 4 est conformée pour pouvoir être insérée entre coffret 2 et façade 3. Une entretoise 4 est amovible et principalement étendue selon un axe 41. Une entretoise 4 comprend un manchon 42 selon l'axe 41, un alésage 43 selon l'axe 41 apte à accueillir une tige filetée 52 d'une vis 5. Selon une caractéristique importante, une entretoise 4 comprend encore une première butée axiale 46 s'étendant radialement relativement à l'axe 41 et conformée de manière à être apte à venir en appui sur une face finie 62 du mur 6, distante de la face brute 61, de l'épaisseur d'un revêtement.

Ainsi, lorsqu'une entretoise 4 est mise en place dans un logement 21 du coffret 2, le manchon 42, qui présente une forme prismatique, telle une forme cylindrique pleine, est inséré dans le logement 21 de forme complémentaire creuse et de dimensions adaptées. Ceci permet un positionnement de l'entretoise 4 latéralement, dans un plan parallèle aux faces 61,62 du mur 6. Le positionnement en profondeur selon l'axe 41 de l'entretoise 4, se confondant avec un axe du logement 21, est déterminé par appui de la première butée axiale 46 contre la face finie 62 du mur 6.

L'entretoise 4 ainsi positionnée est apte à accueillir une vis 5 qui vient prendre place dans l'alésage 43. L'entretoise 4 assure cinq fonctions principales. Le manchon 42 recouvre la vis 5 dans la partie de taille variable située entre coffret 2 et façade 3, supprimant toute possibilité d'un intervalle I tel que dans l'art antérieur, empêchant un contact C de se produire à cet endroit. L'entretoise 4 assure une interface étanche avec la façade 3. L'entretoise assure une interface étanche avec le coffret 2. L'entretoise 4 permet, en coopération avec la vis 5, de réaliser une fixation solide dans le logement 21. Enfin, l'entretoise 4 assure une fonction de butée en profondeur pour la façade 3. Ces différentes fonctions sont détaillées plus avant.

Selon une caractéristique, une entretoise 4 est réalisée en un matériau électriquement isolant, préférentiellement en matière plastique, encore préférentiellement en polypropylène. Ceci permet avantageusement d'assurer la fonction d'isolement électrique entre la vis 5 insérée dans l'entretoise 4 et l'extérieur. Ceci contribue aussi à une réalisation peu coûteuse de l'entretoise 4.

Selon une caractéristique le manchon 42 est fermé sur toute sa périphérie. Le manchon 42 est conformé de manière à, l'entretoise 4 étant en place, couvrir au moins toute la partie pouvant éventuellement être apparente entre coffret 2 et façade 3. Aussi le manchon 42 doit-il être totalement fermé afin d'empêcher tout contact entre l'extérieur et l'alésage 43 où se trouve accueillie la vis 5.

Le manchon 42 est avantageusement, au moins dans sa partie côté coffret destinée à être introduite dans un logement 21, de forme pleine complémentaire de la forme en creux du logement 21, préférentiellement cylindrique.

De plus ladite forme pleine est prismatique afin de pouvoir se translater identiquement à elle-même relativement au logement 21. Autrement dit, tout au long du manchon 42, la section du manchon 42 reste identique à elle-même. De plus cette section du manchon 42 est complémentaire de la section du logement 21.

Ceci permet à l'entretoise 4 d'accommoder une variation de l'épaisseur de revêtement. Une variation de l'épaisseur de revêtement entraîne une variation opposée de l'enfoncement de l'entretoise 4 relativement au logement 21. Ainsi plus le revêtement est épais, plus la face finie 62 est éloignée de la face brute 61, moins l'entretoise 4 est enfoncée dans le logement 21. Quel que soit l'épaisseur de revêtement, la complémentarité des sections, ne laissant qu'un très faible espace entre elles, empêche toute pénétration d'un élément conducteur/porteur d'un potentiel électrique pouvant être présent dans le coffret 2, par exemple une extrémité d'un fil conducteur, entre ces deux sections, et empêche, ici encore, tout risque de contact avec la vis 5.

Selon un mode de réalisation, les formes complémentaires de l'extémité du manchon 42 côté coffret et du logement 21 peut être conformées de manière à réaliser une fonction d'indexage en rotation, telle que décrite plus avant.

Une entretoise 4 comprend encore un embout façade 44 disposé à une extrémité du manchon 42. L'embout façade 44 est apte à faire face à la façade 3 et apte à venir en regard d'un trou 31. La fonction de cet embout façade 44 est d'assurer une interface étanche entre l'entretoise 4 et la façade 2, de manière à empêcher tout contact entre l'extérieur et l'alésage 43, au niveau de ladite interface entre entretoise 4 et façade 2.

Ceci est facilité par le positionnement en profondeur de l'entretoise 4, grâce à la première butée axiale 46, en référence à la face finie 62 du mur 6. La façade 3 étant aussi positionnée en profondeur par un appui contre la face finie 62 du mur 6, l'entretoise 4 et la façade 3 partagent un positionnement en profondeur commun, lié à une même référence relativement à la face finie 62 du mur 6. Aussi la distance en profondeur entre l'embout façade 44 de l'entretoise 4 et la face interne 32 de la façade 3 en regard est constante et connue.

Afin d'éviter tout contact entre l'extérieur et l'alésage 43 au niveau de l'interface entre entretoise 4 et façade 3, l'embout façade 44 est avantageusement conformé de manière complémentaire avec la face interne 32 de la façade 3 au droit d'un trou 31. Ceci peut être réalisé par un simple contact face contre face.

Selon un mode de réalisation possible un emboîtement, offrant avantageusement un recouvrement, permet d'assurer et de sécuriser cette fonction. Selon le mode de réalisation illustré, l'embout façade 44 présente une partie cylindrique extérieure, complémentaire d'un alésage ménagé dans la face interne 32. Alternativement, l'embout façade 44 peut présenter un alésage et la face interne 32 peut comprendre un cylindre extérieur complémentaire. L'ajustement entre ces deux moyens complémentaires est avantageusement glissant de manière à laisser une distance minimale juste suffisante pour permettre un assemblage sans difficulté, sans autoriser une quelconque pénétration. Un recouvrement en profondeur, typiquement de quelques millimètres permet de renforcer et sécuriser l'étanchéité.

Dans toute la présente, le terme étanchéité est équivalent à apte à empêcher un contact électrique.

Une autre fonction de l'embout façade 44 est de former une butée en profondeur, selon l'axe 41, empêchant un enfoncement de la façade 3. Pour cela l'embout façade 44 présente avantageusement une dimension selon l'axe 41 apte à venir en contact contre la face interne 32 dela façade 3. Ceci est avantageusement facilité par le fait que l'entretoise 4, de par sa première butée axiale 46 est référencée par rapport à la face finie 62 et donc partage la même référence en profondeur avec la façade 3.

Le fait que l'entretoise 4 forme une butée en profondeur, assure qu'un vissage trop énergique des vis 5 lors de la fixation de la façade 3 ne risque pas de causer une mise en contrainte de la façade 3.

Selon une autre caractéristique, une entretoise 4 comprend encore un embout coffret 45. Cet embout coffret 45 est disposé à l'autre extrémité du manchon 42 et est apte à venir en regard du coffret 2, dans un logement 21.

Selon une caractéristique avantageuse, l'embout coffret 45 est conformé comme une cheville, du type apte à recevoir une vis et à s'expanser sous l'effet d'un vissage de ladite vis. Pour cela l'embout coffret 45 est fendu en au moins deux ailettes 72 afin de pouvoir s'expanser. De plus l'alésage 43, sensiblement cylindrique au droit du manchon 42, présente une forme sensiblement conique au niveau de l'embout coffret 45 afin que l'introduction d'une vis 5, typiquement par vissage, expanse l'embout coffret 45 en écartant les ailettes 72.

Ainsi, lors d'un assemblage, l'embout coffret 45 est introduit dans un logement 21 lors de la mise en place d'une entretoise 4. Puis lors du vissage d'une vis 5, l'embout coffret 45 est expansé par le vissage de la tige filetée 52 dans l'embout coffret 45. Cette expansion assure une fixation forte de l'entretoise 4 et de la vis 5 relativement au logement 21 et ainsi de la façade 3 avec le coffret 2. Cette fixation est avantageusement démontable par dévissage.

La fixation est établie à la profondeur où est réalisé le vissage. Si le logement 21 présente une section sensiblement identique le long de sa profondeur, la fixation peut être réalisée à toute profondeur et permet ainsi d'accommoder une variation de l'enfoncement de l'entretoise 4 pouvant être occasionnée par une variation de l'épaisseur de revêtement. Ceci permet avantageusement un réglage automatique de la fixation en profondeur.

De manière classique, l'axe d'un logement 21 est sensiblement perpendiculaire aux faces 61,62 du mur 6, lorsque le coffret 2 est installé dans le mur 6. Aussi l'axe 41 d'une entretoise 4, lorsqu'installée dans un logement 21, est aussi sensiblement perpendiculaire aux faces 61,62 du mur 6. Aussi selon une autre caractéristique la première butée axiale 46 comprend avantageusement une face d'appui 47 sensiblement plane, et sensiblement perpendiculaire à l'axe 41. Cette face d'appui 47 est orientée de manière à ce que sa normale sortante soit orientée vers l'embout coffret 45. Ainsi cette face d'appui 47 peut venir s'appuyer sensiblement à plat contre la face finie 62 du mur 6.

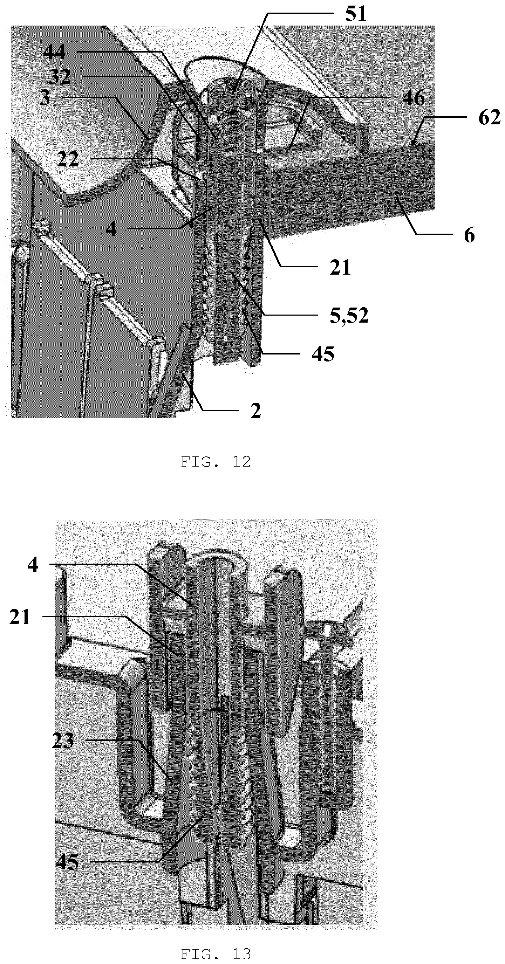

Selon une autre caractéristique, la première butée axiale 46 présente une extension, mesurée radialement relativement à l'axe 41, telle qu'elle déborde latéralement hors du coffret 2 d'au moins quelques millimètres, préférentiellement 7 mm, encore préférentiellement 12 mm. Ainsi pour un logement 21, tel qu'illustré, disposé à environ 3 mm du bord externe du coffret 2, l'extension est au moins égale à 10 mm, préférentiellement au moins égale à 15 mm. L'extension est limitée par la dimension de la façade 3 au droit de la première butée axiale 46, de telle manière à ce que la façade 3 recouvre et cache entièrement la première butée axiale 46, tel que plus particulièrement visible à la figure 12.

Selon une autre caractéristique, une entretoise 4 comprend encore un moyen d'indexage en rotation 71. Ce moyen d'indexage en rotation 71 est complémentaire d'un moyen d'indexage en rotation disposé sur le coffret 2, par exemple sur le logement 21, de telle manière à ce que ces deux moyens d'indexage coopèrent pour orienter l'entretoise 4 autour de son axe 41 de telle manière à diriger à la première butée axiale 46 vers le mur 6, soit sensiblement perpendiculaire à la paroi du coffret 2. Selon un mode de réalisation, l'entretoise 4 comprend une extension 71 dont la face interne est apte à venir en contact avec un méplat réalisé sur la paroi extérieure du logement 21.

Selon une autre caractéristique une entretoise 4 est dimensionnée de manière à ce que l'embout coffret 45 soit toujours totalement introduit dans le logement 21, y compris lorsque l'épaisseur de revêtement est maximale. L'embout coffret 45 étant fendu, il convient que cette fente, entre les ailettes 72, soit toujours totalement insérée dans le logement 21. Aussi, ceci détermine une dimension minimale pour une longueur 49 du manchon 42 insérable dans le logement 21. Cette dimension minimale est déterminée en configuration correspondant à une épaisseur de revêtement nulle, la face finie 62 se confondant avec la face brute 61 du mur 6. A cette valeur minimale est ensuite ajouté une épaisseur de revêtement maximale acceptée de 2 mm, préférentiellement 4mm, et encore préférentiellement 10 mm.

Cette longueur insérable 49 est limitée d'un côté par la fente qui crée un possible point de contact avec l'alésage 43 et la vis 5, et de l'autre côté par une deuxième butée axiale 48.

Ceci garantit que le manchon 42 protège l'alésage 43 et la vis 5 dans toutes les configurations, y compris une configuration où l'épaisseur de revêtement est maximale.

Selon une autre caractéristique, une entretoise 4 comprend encore une deuxième butée axiale 48. Cette deuxième butée axiale 48 est conformée de manière à venir en appui sur un point référencé relativement au logement 21, tel par exemple une ouverture 22 du logement 21. Ceci permet de stopper l'insertion d'une entretoise 4 en profondeur dans un logement 21. Cette deuxième butée axiale 48 est dimensionnée en profondeur de telle manière à ne pas risquer d'entraver l'appui de la première butée axiale 46 sur le mur 6.

La forme de l'embout coffret 45 et la forme du logement 21 peuvent être quelconques, tant qu'elles sont complémentaires et permettent l'insertion. Selon un mode de réalisation, elles sont toutes deux cylindriques, l'embout coffret 45 étant plein et le logement étant creux.

Selon une autre caractéristique, illustrée à la figure 13, le logement 21 présente, sur au moins une partie de sa profondeur, une section 23 de forme conique, selon un cône pointant vers l'extérieur du logement 21, soit un cône s'élargissant avec la profondeur. La conicité est préférentiellement sensiblement égale à 5,5° de demi-angle au sommet. Ceci permet, le cas échéant avec un embout coffret 45 adapté, de renforcer la force de l'assemblage entre entretoise 4 et logement 21.

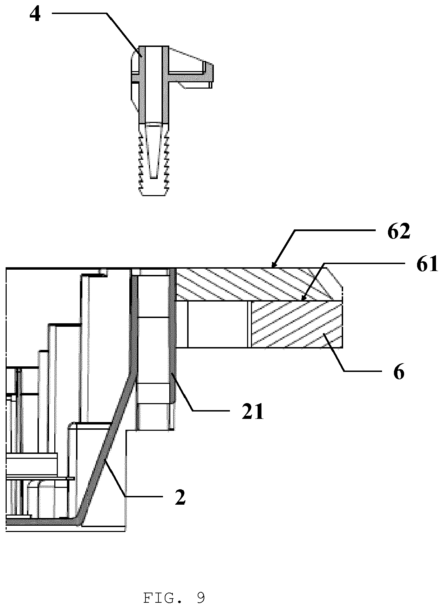

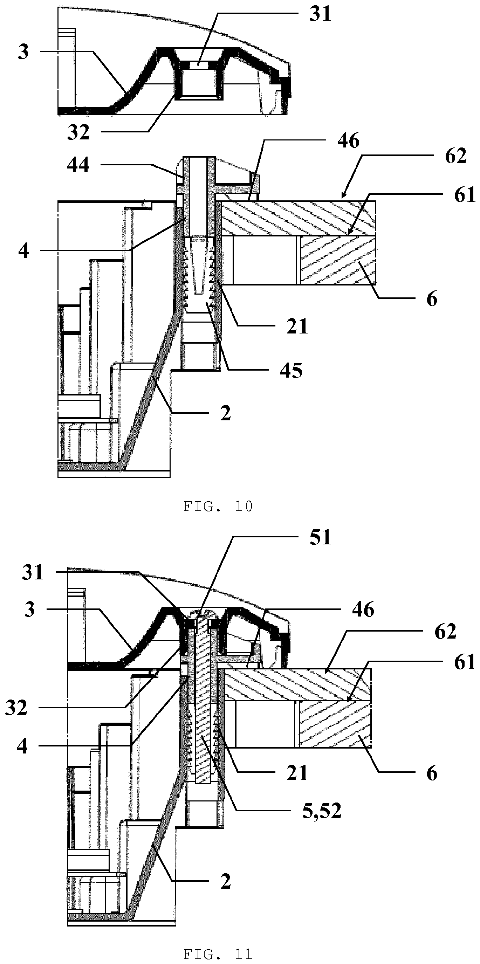

Les figures 9-11 illustrent, en trois étapes, un assemblage d'une façade 3 sur un coffret 2 selon l'invention. Sur la figure 9, le coffret 2 est encastré dans un mur 6 et la figure illustre la mise en place d'une entretoise 4. Une entretoise 4 est présentée, son axe 41 aligné avec l'axe d'un logement 21. Son embout coffret 45 est inséré dans le logement 21. L'entretoise 4 est naturellement orientée par les moyens d'indexage 71 et vient se positionner en profondeur, sa butée axiale 46 en appui contre la face finie 62 du mur 6. La figure 10 montre l'entretoise 4 en place et la présentation de la façade 3. La figure 11 illustre la façade 3 mise en place en engageant l'embout façade 44 avec la face interne 32. Le vissage d'une vis 5 au travers de la façade 3 termine l'assemblage.

L'invention concerne encore une telle entretoise 4 conçue pour être utilisée dans un tel système 1.

L'invention concerne encore un tel logement 21 conçu ou modifié pour être utilisé dans un tel système 1.

L'invention n'est limitée que par les revendications annexées.

## Revendications

1. Système (1) de fixation d'une façade (3) comprenant une pluralité de trous (31), sur un coffret (2) encastré dans un mur (6) de manière à sensiblement affleurer à une face brute (61) du mur (6) et comprenant une même pluralité de logements (21) en regard des trous (31), au moyen d'une même pluralité de vis (5), chaque vis (5) comprenant une tête (51) et une tige filetée (52), chaque trou (31) étant traversant et apte à permettre le passage d'une tige filetée (52) et à arrêter une tête (51), chaque logement (21) étant apte à accueillir une tige filetée (52), ***caractérisé en ce que*** le système (1) comprend encore une même pluralité d'entretoises (4) amovibles, chaque entretoise (4) étant apte à être disposée entre la façade (3) et le coffret (2), principalement étendue selon un axe (41) et comprenant un manchon (42) selon l'axe (41), un alésage (43) selon l'axe (41) apte à accueillir une tige filetée (52) et une première butée axiale (46) s'étendant radialement relativement à l'axe (41) et conformée de manière à être apte à venir en appui sur une face finie (62) du mur (6), distante de la face brute (61), et **en ce qu'**une entretoise (4) comprend encore un embout coffret (45) disposé à une autre extrémité du manchon (42) en regard du coffret (2) et conformé comme une cheville, apte à être introduit dans un logement (21), de telle manière à être apte à s'expanser dans le logement (21) lors du vissage d'une tige filetée (52) dans l'embout coffret (45), une entretoise (4) étant réalisée en un matériau électriquement isolant, préférentiellement en matière plastique, encore préférentiellement en polypropylène.

2. Système (1) selon la revendication 1, où un manchon (42) est fermé sur toute sa périphérie, afin d'empêcher tout contact entre l'extérieur et l'alésage (43).

3. Système (1) selon l'une quelconque des revendications 1 à 2, où une entretoise (4) comprend encore un embout façade (44) disposé à une extrémité du manchon (42) en regard de la façade (3) et conformé de manière complémentaire avec une face interne (32) de la façade (3) au droit d'un trou (31), de manière à empêcher tout contact entre l'extérieur et l'alésage (43).

4. Système (1) selon la revendication 3, où un embout façade (44) présente une dimension, selon l'axe (41), relativement à la première butée axiale (46), telle que l'embout façade (44) forme une butée à l'enfoncement de la façade (3).

5. Système (1) selon l'une des revendications 1 à 4, où la première butée axiale (46) comprend une face d'appui (47) sensiblement plane, sensiblement perpendiculaire à l'axe (41) et regardant vers l'embout coffret (45).

6. Système (1) selon l'une quelconque des revendications 1 à 5, où la première butée axiale (46) présente une extension, mesurée radialement relativement à l'axe (41), au moins égale à 10 mm, préférentiellement au moins égale à 15 mm.

7. Système (1) selon l'une quelconque des revendications 1 à 6, où une entretoise (4) comprend encore un moyen d'indexage en rotation (71), complémentaire d'un moyen d'indexage en rotation disposé sur un logement (21), aptes à coopérer pour orienter l'entretoise (4) autour de son axe (41) de telle manière à diriger la première butée axiale (46) vers le mur (6).

8. Système (1) selon l'une quelconque des revendications 1 à 7, où un manchon (42) comprend une longueur (49) insérable dans un logement (21), déterminée telle qu'une valeur minimale soit déterminée telle que l'embout coffret (45) soit entièrement inséré dans le logement (21) en l'absence de revêtement et en ajoutant à cette valeur minimale une épaisseur de revêtement maximale acceptable égale à 2mm, préférentiellement égale à 4 mm, et encore préférentiellement égale à 10 mm.

9. Système (1) selon l'une quelconque des revendications 1 à 8, où une entretoise (4) comprend encore une deuxième butée axiale (48) apte à venir en appui sur une ouverture (22) d'un logement (21).

10. Système (1) selon l'une quelconque des revendications 1 à 9, comprenant une entretoise adaptée pour un logement (21) présentant une forme sensiblement cylindrique creuse.

11. Système (1) selon la revendication 10, comprenant une entretoise adaptée pour un logement (21) comprenant une section (23) de forme conique, selon un cône pointant vers l'extérieur du logement (21), préférentiellement de conicité sensiblement égale à 5,5° de demi-angle au sommet.

## Patentansprüche

1. System (1) zum Anbringen einer Fassade (3) umfassend eine Vielzahl von Löchern (31), auf einem in eine Mauer (6) eingelassenen Gehäuse (2), solcherart, dass es im Wesentlichen bündig mit einer Rohfläche (61) der Mauer (6) ist und umfassend eine gleiche Vielzahl von Aufnahmen (21) in Hinblick auf die Löcher (31), mittels einer gleichen Vielzahl von Schrauben (5), wobei jede Schraube (5) einen Kopf (51) und einen Gewindestab (52) umfasst, wobei jedes Loch (31) durchgängig ist und in der Lage, den Durchgang eines Gewindestabs (52) zu ermöglichen und einen Kopf (51) zu stoppen, wobei jede Aufnahme (21) in der Lage ist, einen Gewindestab (52) aufzunehmen, ***dadurch gekennzeichnet, dass*** das System (1) weiter eine gleiche Vielzahl von abnehmbaren Distanzstücken (4) umfasst, wobei jedes Distanzstück (4) in der Lage ist, zwischen der Fassade (3) und dem Gehäuse (2) angeordnet zu werden, im Wesentlichen erstreckt gemäß einer Achse (41) und umfassend eine Muffe (42) gemäß der Achse (41), eine Bohrung (43) gemäß der Achse (41), in der Lage, einen Gewindestab (52) aufzunehmen, und einen ersten axialen Anschlag (46), sich radial relativ zu der Achse (41) erstreckend und solcherart beschaffen, dass er dafür ausgelegt ist, auf einer fertigen Fläche (62) der Mauer (6) aufzuliegen, beabstandet von der Rohfläche (61), und dadurch, dass ein Distanzstück (4) weiter ein Gehäuseendstück (45) umfasst, angeordnet an einer anderen Extremität der Muffe (42) in Hinblick auf das Gehäuse (2) und beschaffen wie ein Dübel, in der Lage, in eine Aufnahme (21) eingeführt zu werden, solcherart, dass es in der Lage ist, sich beim Schrauben eines Gewindestabs (52) in das Gehäuseendstück (45) in die Aufnahme (21) zu erstrecken, wobei ein Distanzstück (4) aus einem elektrisch isolierenden Material besteht, bevorzugt aus Kunststoffmaterial, noch bevorzugter aus Polypropylen.

2. System (1) nach Anspruch 1, in dem eine Muffe (42) über ihre gesamte Peripherie geschlossen ist, um jeden Kontakt zwischen dem Außenbereich und der Bohrung (43) zu verhindern.

3. System (1) nach einem der Ansprüche 1 bis 2, in dem ein Distanzstück (4) weiter ein Fassadenendstück (44) umfasst, angeordnet an einer Extremität der Muffe (42) gegenüber der Fassade (3) und beschaffen auf komplementäre Weise mit einer Innenseite (32) der Fassade (3) rechts eines Lochs (31), solcherart, dass jeder Kontakt zwischen dem Außenbereich und der Bohrung (43) verhindert wird.

4. System (1) nach Anspruch 3, in dem das Fassadenendstück (44) ein Maß aufweist gemäß der Achse (41), relativ zu dem ersten axialen Anschlag (46), solcherart, dass das Fassadenendstück (44) einen Anschlag der Einsenkung der Fassade (3) bildet.

5. System (1) nach einem der Ansprüche 1 bis 4, in dem der erste axiale Anschlag (46) eine im Wesentlichen flache, im Wesentlichen zu der Achse (41) senkrechte und dem Gehäuseendstück (45) zugewandte Auflagefläche (47) umfasst.

6. System (1) nach einem der Ansprüche 1 bis 5, in dem der erste axiale Anschlag (46) eine Verlängerung aufweist, radial gemessen relativ zu der Achse (41), wenigstens gleich 10 mm, bevorzugt wenigstens gleich 15 mm.

7. System (1) nach einem der Ansprüche 1 bis 6, in dem ein Distanzstück (4) weiter ein Indexierungsmittel in Rotation (71) umfasst, komplementär zu einem Indexierungsmittel in Rotation angeordnet auf einer Aufnahme (21), in der Lage, miteinander zu kooperieren, um das Distanzstück (4) um seine Achse (41) zu orientieren, solcherart, dass der erste axiale Anschlag (46) zu der Mauer (6) geleitet wird.

8. System (1) nach einem der Ansprüche 1 bis 7, in dem eine Muffe (42) weiter eine Länge (49) umfasst einführbar in eine Aufnahme (21), solcherart festgelegt, dass ein Minimalwert solcherart festgelegt ist, dass das Gehäuseendstück (45) vollständig in die Aufnahme (21) eingeführt wird in Abwesenheit einer Verkleidung und diesem Minimalwert eine akzeptable maximale Verkleidungsdicke hinzufügend gleich 2 mm, bevorzugt gleich 4 mm und noch bevorzugter gleich 10 mm.

9. System (1) nach einem der Ansprüche 1 bis 8, in dem ein Distanzstück (4) weiter einen zweiten axialen Anschlag (48) umfasst, in der Lage, auf einer Öffnung (22) einer Aufnahme (21) aufzuliegen.

10. System (1) nach einem der Ansprüche 1 bis 9, umfassend ein für eine Aufnahme (21) angepasstes Distanzstück, im Wesentlichen eine hohle zylindrische Form aufweisend.

11. System (1) nach Anspruch 10, umfassend ein für eine Aufnahme (21) angepasstes Distanzstück, umfassend einen Bereich (23) von konischer Form gemäß einem außerhalb der Aufnahme (21) weisenden Konus, bevorzugt von einer Konizität im Wesentlichen gleich einem Halbwinkel von 5,5° an der Spitze.

## Claims

1. System (1) for attaching a faceplate (3) comprising a plurality of holes (31), to a box (2) built into a wall (6) in such a way as to be substantially flush with an unworked face (61) of the wall (6) and comprising a same plurality of housings (21) facing holes (31), by means of a same plurality of screws (5), each screw (5) comprising a head (51) and a threaded rod (52), each hole (31) being a through-hole and able to allow the passage of a threaded rod (52) and to stop a head (51), each housing (21) being able to receive a threaded rod (52), **characterised in that** the system (1) further comprises a same plurality of removable spacers (4), each spacer (4) able to be disposed between the faceplate (3) and the box (2), mainly extended along an axis (41) and comprising a sleeve (42) along the axis (41), a bore (43) along the axis (41) able to receive a threaded rod (52) and a first axial stop (46) extending radially with respect to the axis (41) and shaped in such a way as to be able to bear against a finished face (62) of the wall (6), away from the unworked face (61), and **in that** a spacer (4) further comprises a box endpiece (45) disposed at another end of the sleeve (42) facing the box (2) and shaped like a dowel, able to be introduced into a housing (21), in such a way as to be able to expand in the housing (21) during the screwing of a threaded rod (52) in the box endpiece (45), a spacer (4) being made from an electrically insulated material, preferably from plastic, more preferably from polypropylene.

2. System (1) according to claim 1, where a sleeve (42) is closed over its entire periphery, in order to prevent any contact between the outside and the bore (43) .

3. System (1) according to any of claims 1 to 2, where a spacer (4) further comprises a faceplate endpiece (44) disposed at an end of the sleeve (42) facing the faceplate (3) and shaped in a manner that is complementary with an internal face (32) of the faceplate (3) in line with a hole (31), in such a way as to prevent any contact between the outside and the bore (43).

4. System (1) according to claim 3, where a faceplate endpiece (44) has a dimension, along the axis (41), with respect to the first axial stop (46), such that the faceplate endpiece (44) forms a stop at the sinking of the faceplate (3).

5. System (1) according to one of claims 1 to 4, where the first axial stop (46) comprises a substantially flat bearing face (47), substantially perpendicular to the axis (41) and facing towards the box endpiece (45).

6. System (1) according to any of claims 1 to 5, where the first axial stop (46) has an extension, measured radially with respect to the axis (41), at least equal to 10 mm, preferably at least equal to 15 mm.

7. System (1) according to any of claims 1 to 6, where a spacer (4) further comprises a means for rotary indexing (71), complementary with a means for rotary indexing disposed on a housing (21), able to cooperate to orient the spacer (4) around its axis (41) in such a way as to direct the first axial stop (46) towards the wall (6).

8. System (1) according to any of claims 1 to 7, where a sleeve (42) comprises a length (49) that can be inserted into a housing (21), determined such that a minimum value is determined such that the box endpiece (45) is entirely inserted into the housing (21) in the absence of coating and by adding to this minimum value an acceptable maximum coating thickness equal to 2 mm, preferably equal to 4 mm, and more preferably equal to 10 mm.

9. System (1) according to any of claims 1 to 8, where a spacer (4) further comprises a second axial stop (48) able to bear against an opening (22) of a housing (21) .

10. System (1) according to any of claims 1 to 9, comprising a spacer adapted for a housing (21) having a substantially hollow cylindrical shape.

11. System (1) according to claim 10, comprising a spacer adapted for a housing (21) comprising a section (23) of tapered shape, along a cone pointing outwards of the housing (21), preferably with a conicity substantially equal to 5.5° half-angle at the top.
